Europäisches Patentamt

European Patent Office

Office européen des brevets

(11) Veröffentlichungsnummer: **0 200 897**

**A2**

(12) **EUROPÄISCHE PATENTANMELDUNG**

(21) Anmeldenummer: 86103825.5

(22) Anmeldetag: 20.03.86

(51) Int. Cl.⁴: **G01M 3/16**

(30) Priorität: 09.05.85 CH 1973/85

(43) Veröffentlichungstag der Anmeldung:
17.12.86 Patentblatt 86/46

(84) Benannte Vertragsstaaten:
AT CH DE FR GB IT LI SE

(71) Anmelder: **Meier-Schenk AG**
**Herrengütlistrasse 17**
**CH-8304 Wallisellen(CH)**

(72) Erfinder: **Casanova, Reto, Dr.**
**Sonneggstrasse 35**
**CH-8006 Zürich(CH)**

(74) Vertreter: **Hunziker, Jean**
**Patentanwaltsbureau Jean Hunziker**
**Schulhausstrasse 12**
**CH-8002 Zürich(CH)**

(54) **Indikator zum Feststellen des Auftretens einer Leckflüssigkeit.**

(57) Zur Erzeugung eines elektrischen Signals beim Auftreten einer Leckflüssigkeit im Material das den Indikator umgibt ist eine monostabile elektrische Schaltvorrichtung vorgesehen. Von zwei Schaltelementen (21,31) ist das eine ein frei drehbar auf einer Achse (9) gelagerter Stabmagnet (21) und das andere ein ortsfester Anschlagstift (31) der in den Schwenkbereich des Stabmagneten (21) ragt. In diesen Schwenkbereich ragt auch ein Distanzhalter (41) der dem Stabmagneten (21) und den Anschlagstift (31) vorgespannt voneinander getrennt hält. Der Distanzhalter (41) sowie eine die Indikatorteile (8,9,11,21,31 und 41) umgebende Hülle (51) bestehen aus vorzugsweise selektiv durch die Leckflüssigkeit auflösbarem Feststoff. Gelangt Leckflüssigkeit an den Indikator, zerstört diese die Hülle (51) und den Distanzhalter (41). Der Stabmagnet (21) kann sich unter der Wirkung der magnetischen Anziehung auf den Anschlagstift (31) drehen und steuert dabei einen Reedschalter (11) an der dadurch über Leitungen (61,71) in einem externen Mess-und Anzeigegerät eine Leckanzeige auslöst.

# INDIKATOR ZUM FESTSTELLEN DES AUFTRETENS EINER LECKFLUESSIGKEIT

Die vorliegende Erfindung bezieht sich auf einen Indikator zum Feststellen des Auftretens einer Leckflüssigkeit in einem ihn umgebenden, zu überwachenden Material, mit einer monostabilen, elektrischen Schaltvorrichtung, welche, durch in den Indikator eintretende Flüssigkeit betätigt, ein elektrisches Signal auslöst, durch welches in einem an den Indikator angeschlossenen Mess-, Anzeige- oder Alarmgerät eine Leckanzeige auslösbar ist.

Ein Anwendungsgebiet solcher Indikatoren sind insbesondere erdverlegte, thermisch isolierte Leitungen, z.B. Fernwärmeleitungen, bei denen das jeweils als Stahlrohr ausgebildete, mediumführende Innenrohr von einem Mantelrohr umschlossen und der Zwischenraum mit einem verschäumten Isoliermaterial, meist einem PU-Schaum ausgeschäumt ist. Da das Isoliermaterial in feuchtem Zustand seine wärmedämmende Eigenschaft einbüsst und für die Innenrohre dann auch die Gefahr der Korrodierung besteht, wenn die sie umgebende Isolation durchfeuchtet ist, müssen Massnahmen getroffen werden, um das Auftreten von Nassstellen infolge von Undichtheiten der Rohrummantelung oder des Innenrohres, möglichst frühzeitig festzustellen und möglichst genau zu orten. Hierzu werden in Abständen in der Rohrleitung, z.B. alle 6 oder 12 m zweckmässig im Bereich der Stossstellen der Rohrabschnitte Indikatoren in die Wärmedämmschicht eingebettet, die ihrerseits über ebenfalls in die Wärmedämmung eingebettete elektrische Leitungen mit einem Mess-, Anzeige-oder Alarmgerät verbunden sind, welches eine allfällig auftretende Leckstelle anzeigt und ortet.

Dieses Gerät kann z.B. ein Impuls-Echogerät sein. Zwischen den als Platten ausgebildeten Schaltelementen einer bekannten Indikatorausführung ist ein elektrisch isolierendes, saugfähiges Material, z.B. Löschpapier angeordnet. Dabei ist die Anordung so getroffen, dass der Indikator im trockenen Zustand einschliesslich des Wasseraufnahmematerials zwischen den Platten den Kennwiderstand der verwendeten Leiter nicht wesentlich verändert, aber im feuchten Zustand, nämlich bei in den Spalt zwischen den Platten eindringender Feuchtigkeit einen erheblichen Nebenschluss zwischen den beiden Leitern erzeugt, der über das Impuls-Echogerät festgestellt und geortet werden kann.

In der Praxis treten jedoch bei der Anwendung solcher bekannter Indikatoren Schwierigkeiten insofern auf, als sie zu empfindlich sind und daher vielfach Alarme verursachen können, welche zu kostspieligen Freilegungen zwingen, die sich dann als unnötig erweisen.

Die bekannten Indikatoren dieser Art weisen somit aufgrund ihrer Bauart und elektrochemischen Arbeitsweise zusammengefasst die Nachteile auf, dass sie in direktem Kontakt mit allen in dem sie umschliessenden Material vorhandenen chemischen Stoffen sowie selbst unter elektrischer Spannung stehen und daher sehr störanfällig sind, dass ihr Isolationswiderstand bei zunehmender Durchfeuchtung nur allmählich, statt wie erwünscht, sprunghaft abnimmt, dass sie sowohl auf die Dampf-als auch auf die flüssige Phase etwa gleich reagieren, statt, wie erwünscht, nur auf die flüssige Phase des überwachten Mediums, dass sie eine merkliche elektrische Kapazität aufweisen, was sich auf die Fehlerortungsgenauigkeit negativ auswirkt und dass sie praktisch nur auf ionenhaltiges Wasser reagieren.

Der Erfindung liegt die Aufgabe zugrunde Indikatoren der eingangs genannten Art so zu verbessern, dass sie vor Stör einflüssen geschützt sind und erst beim Auftreten relevanter Mengen des Leckmediums in flüssiger Form ansprechen, welche eindeutig auf eine Leckstelle hinweisen, nicht aber bereits beim Auftreten von Dämpfen der überwachten Flüssigkeit, z.B., wenn die überwachte Flüssigkeit Wasser ist, als Folge von Restfeuchtigkeit im Wärmedämmmaterial, und dass sie zusätzlich ein ausgeprägtes Kippverhalten aufweisen.

Zur Lösung dieser Aufgabe zeichnet sich der erfindungsgemässe Indikator dadurch aus, dass die Schaltvorrichtung zwei Schaltelemente aufweist, welche rotatorisch und translatorisch aufeinander zu und voneinander weg beweglich, sowie in Bewegungsrichtung aufeinander zu vorgespannt sind, und die durch einen Distanzhalter getrennt gehalten sind, welcher aus einem durch Leckflüssigkeit zerstörbaren Feststoff besteht, wobei beim Zutritt von Leckflüssigkeit die dabei erfolgende Zerstörung des Distanzhalters eine relative Bewegung der Schaltelemente unter der genannten Vorspannung freigibt, welche direkt oder indirekt das genannte Signal und damit eine Leckanzeige auslöst.

Durch die erfindungsgemäss getroffenen Massnahmen wird sichergestellt, dass eine Störmeldung erst bei einem ernsthaften Leck ausgelöst wird, das auch eine Störmeldung auslösen soll, nämlich wenn soviel Flüssigkeit an den Indikator gelangt, dass der durch diese Flüssigkeit zerstörbare Distanzhalter mindestens soweit zerstört wird, dass die beiden Schaltelemente unter der Wirkung der Vorspannung die relative Bewegung ausführen können. Ist es aber einmal soweit, wird das Lecksignal klar und ohne weiteren Verzug ausgelöst.

Im Rahmen der Erfindung sind dabei eine Vielzahl unterschiedlicher konstruktiver Lösungen des Indikators denkbar.

Gemäss einer Ausführungsart kann mindestens das eine der beiden Schaltelemente durch Magnetkraft oder durch Federkraft in Richtung auf das andere Schaltelement zu beaufschlagt sein, wobei dann zweckmässig das eine der beiden Schaltelemente stationär und das andere Schaltelement bezüglich dem erstgenannten mobil angeordnet ist.

Hierbei kann das eine der beiden Schaltelemente frei drehbar auf einer Achse gelagert sein und das andere Schaltelement ortsfest als Anschlag für dieses erste mobile Schaltelement in den Schwenkbereich des letzteren ragen, in welches auch der Distanzhalter ragt, welcher das mobile Schaltelement in seiner vorgespannten Lage hält.

Anderseits kann natürlich ein mobiles Schaltelement bezüglich dem anderen ortsfesten Schaltelement translatorisch verschiebbar angeordnet sein.

Eine konstruktiv besonders einfache Ausführung ergibt sich beispielsweise, wenn die Schaltelemente übereinander angeordnet werden, wobei nach Zerstörung des Distanzhalters das obere, mobile Schaltelement unter der Wirkung der Schwerkraft auf das untere stationär angeordnete Schaltelement fällt und dabei das Lecksignal auslöst.

In allen vorerwähnten Beispielen können die beiden Schaltelemente als Kontakte eines Stromkreises ausgebildet sein und diesen dann bei einer gegenseitigen Berührung am Ende der Relativbewegung nach Zerstörung des Distanzhalters - schliessen und dadurch das Lecksignal direkt auslösen.

Bevorzugte Ausführungsformen ergeben sich, wenn im Bereich der durch die Zerstörung des Distanzhalters ausgelösten relativen Bewegung der beiden Schaltelemente ein Reedschalter angeordnet ist, wobei die durch eine Zerstörung des Abstandshalters freigegebene Bewegung des als Magnet ausgebildeten Schaltelementes zum anderen Schaltelement hin diesen Reedschalter ansteuert und dadurch indirekt das Lecksignal auslöst, ohne dass es zu einer direkten Berührung der beiden Schaltelemente kommen muss. Bei dieser Ausführung ist somit ein Lecksignal auch dann gewährleistet, wenn aus irgendeinem Grunde die Leckflüssigkeit den Distanzhalter nur soweit zu zertören, z.B. aufzulösen vermag, dass das mobile Schaltelement sich mindestens bis zum Schaltpunkt des Reedschalters verschieben kann.

Dabei kann das eine Schaltelement ein ortsfest angeordneter Eisenkörper sein, von welchem der Reedschalter als Gleitführung für das als ringförmigen Permanentmagneten ausgebildeten mobile andere Schaltelement abragt, und der Distanzhalter ist dann als zwischen den beiden Schaltelementen auf den Reedschalter aufgeschobene Hülse ausgebildet.

Ein noch wirksamerer Schutz gegen unerwünschte Alarme wird durch eine Weiterbildung des erfindungsgemässen Indikators erreicht, bei welcher dieser dampfdicht von einer Hülle umschlossen ist, welche mindestens teilweise aus einem durch Leckflüssigkeit zerstörbaren Feststoff besteht und wenn der Distanzhalter und gegebenenfalls die Hülle aus Materialien bestehen, welche ein bezogen auf die überwachte Flüssigkeit selektives Löslichkeitsverhalten besitzen.

So können beispielsweise der Distanzhalter und gegebenenfalls die Hülle aus Material bestehen, das mit Oel, nicht aber mit Wasser reagiert, wobei dann ein solcher Indikator zum Feststellen von Oel auf einer Wasserfläche, z.B. in einem Hafen oder dgl. eingesetzt werden kann.

Ebenso kann aber der erfindungsgemässe Indikator zum Feststellen des Auftretens von Leckflüssigkeit in wärmedämmenden Isolierungen von Fernheizleitungen eingesetzt werden, indem dann der Distanzhalter aus einem mit Wasser reagierenden Metall oder einer solchen Legierung besteht.

Die Erfindung wird im folgenden anhand eines Ausführungsbeispiels mit Bezug auf die Zeichnung näher erläutert. Es zeigen:

Fig. 1 schematisch einen Längsschnitt durch eine Ausführungsform eines Indikators mit translatorischer Relativbewegung der beiden Schaltelemente;

Fig. 2 eine schematische Schnittdarstellung einer Ausführungsform eines Indikators mit rotatorischer Relativbewegung der beiden Schaltelemente zur Erzeugung eines Dauersignals, und

Fig. 3 eine Draufsicht auf den Indikator der Fig. 2 bei abgehobenem Gehäusedeckel.

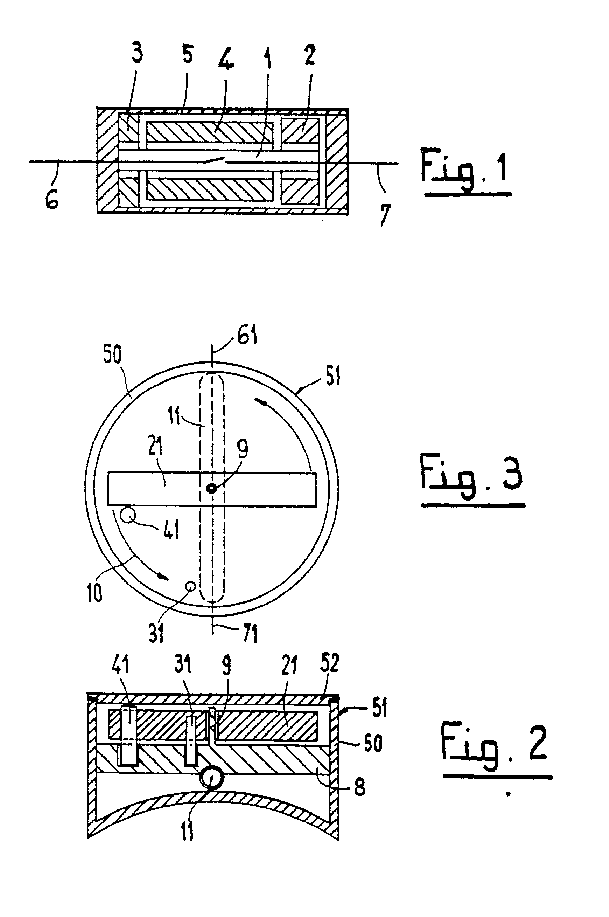

Bei der Ausführungsvariante der Figur 1 dient ein zylindrisches Schaltelement in Form eines handelsüblichen Reedschalters 1 als Gleitführung für ein axial auf ihm verschiebbares Schaltelement in Form eines axial magnetisierten Ringmagneten 2. An einem Ende des Schalters 1 ist ein Eisenring 3 als zweites Schaltelement ortsfest angeordnet. Zwischen den beiden Schaltelementen 2 und 3 ist, konzentrisch um den Schalter 1 ein hülsenförmiger Distanzhalter 4 angeordnet, der die beiden Schaltelemente 2, 3 daran hindert, sich unter der durch die magnetische Anziehungskraft bewirkten Vorspannung gegeneinander zu zu bewegen. Dieser Distanzhalter 4 besteht erfindungsgemäss aus einem Material, das durch die Flüssigkeit, deren Lecken durch den Indikator überwacht werden soll, zerstörbar ist.

Die Indikatorteile 1 bis 4 sind dampfdicht von einer Hülle 5 umschlossen, welche ebenfalls zumindest teilweise aus einem durch die Flüssigkeit, deren Lecken überwacht werden soll, zerstörbaren Feststoffen besteht.

Mit 6 und 7 sind die elektrischen Leitungen bezeichnet, die dampfdicht aus der Hülle 4 herausgeführt sind und den Reedschalter 1 an ein externes nicht näher dargestelltes, an sich bekanntes Mess-, Anzeige-oder Alarmgerät anschliessen, in welchem die Ansteuerung des Reedschalters 1 eine Leckanzeige auslöst.

Bei der in den Fig. 2 und 3 dargestellten Ausführungsvariante erfolgt die Ansteuerung des hier mit 11 bezeichneten Reedschalters durch eine rotatorische Relativbewegung der beiden hier mit 21 und 31 bezeichneten Schaltelemente. Von einer zweckmässig aus Kunststoff bestehenden kreisrunden Scheibe 8 ragt zentral ein Achszapfen 9 vor, um den ein Stabmagnet 21 frei drehbar gelagert ist. Dieser Stabmagnet 21 bildet das eine, mobile Schaltelement des Indikators. Dieses wirkt zusammen mit einem zweiten, ortsfesten Schaltelement in Form eines exzentrisch von der Scheibe 8 vorragenden Eisenstiftes 31 der als Anschlag in den Schwenkbereich des mobilen Schaltelementes 21 ragt. In diesen Schwenkbereich ragt auch der Distanzhalter, welcher hier als ebenfalls in die Scheibe 8 eingesetzter und von deren Ebene abragender Zapfen 41 ausgebildet ist. Dieser Stift 41 bildet einen Anschlag, welcher den Stabmagneten 21 daran hindert sich unter der durch die magnetische Anziehungskraft bewirkten Vorspannung in Richtung des Pfeiles 10 bis zum Anschlag an den Eisenstift 31 zu verdrehen. Der Zaphen 41 besteht wiederum erfindungsgemäss aus einem Material, das durch die Flüssigkeit, deren Lecken durch den Indikator überwacht werden soll, zerstörbar ist.

Unterhalb der Scheibe 8 ist als Schaltelement wiederum ein handelsüblicher Reedschalter 11 angeordnet, dessen Längsachse wie dargestellt etwa senkrecht zu der Längsachse des Stabmagneten 21 in dessen in den Figuren dargestellten vorgespannten Lage verläuft.

Die Indikatorteile 8,9,11,21,31 und 41 sind hier wiederum, wie beim Beispiel der Fig. 1 dampfdicht in einer Hülle 51 hier in Form eines Gehäuses 50 mit Deckel 52 untergebracht aus welcher, ebenfalls dampfdicht die elektrischen Leitungen 61, 71 herausgeführt sind, welche den Reedschalter 11 an ein externes, nicht näher dargestelltes, an sich bekanntes Mess-, Anzeige-oder Alarmgerät anschliessen, in welchem die Ansteuerung des Reedschalters 11 eine Leckanzeige auslöst.

Die Hülle 51 kann, ebenfalls wie im ersten Ausführungsbeispiel, zweckmässig aus einem Feststoff hergestellt sein, welcher durch die Flüssigkeit deren Lecken überwacht werden soll zerstörbar ist.

Bei einer Anwendung der beschriebenen Indikatoren zum Feststellen des Auftretens eines Leckes in einer erdverlegten Fernwärmeleitung werden solche Indikatoren in regelmässigen Abständen, beispielweise in die verschäumte Wärmedämmschicht zwischen dem Mediumrohr und dem äusseren Mantelrohr, vorteilhaft an den Stossstellen der einzelnen Rohrabschnitte eingebettet, z.B. an dem Mediumrohr befestigt, und über die Leitungen 6 und 7 bzw. 61 und 71 mit einem externen, beispielsweise in einer Ueberwachungszentrale untergebrachten Mess-und Anzeigegerät verbunden. Bei einer solchen Anwendung ist die Flüssigkeit, deren Auftreten in dem den Indikator umgebenden Wärmedämmmaterial überwacht werden soll Wasser, das entweder durch ein Leck des Mediumrohres ausströmt oder aber auch durch ein Leck im Mantelrohr aus dem die Leitung umgebenden Erdreich eindringt. In diesem Fall wird als Material für den Distanzhalter 4 bzw. 41 und für die Hülle 5 bzw. 51 ein handelsüblicher und in geeigneter Weise verarbeitbarer hydrolisierbarer oder wasserlöslicher Feststoff verwendet, z.B. ein Kunststoff mit diesen Eigenschaften, ein ebensolches, also mit Wasser reagierendes Metall oder eine solche Legierung, die vorzugsweise zusätzlich gegen Stoffe die beim Verschäumen von Polyurethan -dem meist verwendeten Wärmedämmmaterial -frei werden oder verwendet werden resistent ist, sodass die Hülle und insbesondere der Distanzhalter durch solche Stoffe nicht beschädigt werden können und die ein inbezug auf die überwachte Flüssigkeit selektives Löslichkeitsverhalten besitzen, d.h. nur gerade durch die zu überwachende Flüssigkeitsart zerstörbar sind.

Die Hülle 5 bzw. 51, auf die bei gewissen Anwendungen des erfindungsgemässen Indikators verzichtet werden kann, hat in den vorliegenden Anwendungsbeispielen die Aufgabe zu vermeiden, dass die monostabile Schaltvorrichtung des Indikators beim Einschäumen desselben chemisch angegriffen und beschädigt wird. Ausserdem werden Restfeuchtigkeit aus der Verschäumung, insbesondere Dampf oder geringe Mengen kondensiertes Wasser, insbesondere Kondensat in Tropfenform durch die Hülle aufgenommen und von dieser zurückgehalten.

Tritt dagegen ein ernsthaftes Leck auf, das auch eine Leckanzeige auslösen soll, d.h. wenn hier grössere Wassermengen zum Indikator gelangen, wird zunächst die Schutzhülle 5 bzw. 51 aufgelöst. Die Leckflüssigkeit gelangt dann zur eigentlichen Schaltvorrichtung, insbesondere zum Abstandshalter 4 bzw. 41 und zerstört oder löst diesen in einem gesteuerten Korrosionsprozess auf und beseitigt damit das Hindernis, das die beiden Schaltelemente 2 und 3 bzw. 21 und 31 bisher daran hinderte sich unter der Wirkung der magnetischen Anziehungskraft aufeinander zu zu bewegen.

Beim Ausführungsbeispiel der Fig. 1 gleitet in einem solchen Fall, d.h. nach Zerstörung des Distanzhalters 4 der Ringmagnet 22 auf dem Reedschalter 1 geführt auf den Eisenring 3 zu, durchläuft dabei den Schaltpunkt des Schalters 1 und löst durch dessen kurzzeitige Betätigung das Lecksignal aus, welches am Mess-und Anzeigegerät im Messraum die Leckanzeige bewirkt. Wie ohne weiteres erkennbar, erfolgt diese Leckanzeige mit Sicherheit selbst dann, wenn das mobile Schaltelement 2, beispielsweise durch Ueberreste des zerstörten Distanzhalters 4, an einem direkten Kontakt mit dem stationären Schaltelement 3 gehindert wird.

Beim Ausführungsbeispiel der Fig. 2 und 3 bewirkt die Zerstörung des Distanzzapfens 41, welcher bisher den Stabmagnet 21 in seiner vorgespannten Lage hielt, dass der Stabmagnet 21 nunmehr eine Drehung um angenähert 90° bis zum Anschlag an den Stift 31 ausführt und dies auch dann, wenn dieser Stift aus einem nichtmagnetischen Material besteht oder überhaupt fehlt, da bereits die Anordung der Schaltglieder des Reedschalters 11 und der Leitungen 61, 71 hierzu genügen würden. Die Ausführung gemäss der Fig. 2 und 3 hat auch den Vorteil, dass sie statt eines Ringmagneten einen billigeren Stabmagneten verwenden kann.

Auf die besonderen Vorteile einer indirekten Auslösung des Lecksignals durch die Relativbewegung der beiden Schaltelemente kann natürlich auch verzichtet und stattdessen auf die einleitend erwähnten Varianten des erfindungsgemässen Indikators zurückgegriffen werden, bei welchen die beiden Schaltelemente selbst Kontakte in einem zum Mess-und Anzeigegerät führenden Stromkreis bilden und diesen bei einer gegenseitigen Berührung nach Zerstörung des Distanzhalters schliessen und dadurch das Lecksignal auslösen.

## Ansprüche

1. Indikator zum Feststellen des Auftretens einer Leckflüssigkeit in einem ihn umgebenden, zu überwachenden Material, mit einer monostabilen, elektrischen Schaltvorrichtung, welche durch in den Indikator eintretende Flüssigkeit betätigt, ein elektrisches Signal auslöst, durch welches in einem an den Indikator angeschlossenen Mess-, Anzeige- oder Alarmgerät eine Leckanzeige auslösbar ist, dadurch gekennzeichnet, dass die Schaltvorrichtung zwei Schaltelemente (2,3 bzw. 21, 31) aufweist, welche rotatorisch oder translatorisch aufeinander zu und voneinander weg beweglich, sowie in Bewegungsrichtung aufeinander zu vorgespannt sind, und die durch einen Distanzhalter (4 bzw. 41) getrennt gehalten sind, welcher aus einem durch Leckflüssigkeit zerstörbaren Feststoff besteht, wobei beim Zutritt von Leckflüssigkeit die dabei erfolgende Zerstörung des Distanzhalters (4 bzw. 41) eine relative Bewegung der Schaltelemente - (2,3 bzw. 21,31) unter der genannten Vorspannung freigibt, welche direkt oder indirekt das genannte Signal und damit eine Leckanzeige auslöst.

2. Indikator nach Anspruch 1, dadurch gekennzeichnet, dass mindestens das eine der beiden Schaltelemente (2,3 bzw. 21,31) durch Federkraft in Richtung auf das andere Schaltelement zu beaufschlagt ist.

Indikator nach Anspruch 1, dadurch gekennzeichnet, dass mindestens das eine der beiden Schaltelemente (2,3 bzw. 21,31) ein Permanentmagnet ist.

4. Indikator nach einem der Ansprüche 1 bis 3, dadurch gekennzeichnet, dass das eine der beiden Schaltelemente (21,31) frei drehbar auf einer Achse (9) gelagert ist und das andere Schaltelement (31) ortsfest als Anschlag in den Schwenkbereich des erstgenannten Schaltelementes (21) ragt, in welchen auch der Distanzhalter (41) vorsteht, welcher das erstgenannte, mobile Schaltelement (21) in seiner vorgespannten Lage hält.

5. Indikator nach einem der Ansprüche 1 bis 4, dadurch gekennzeichnet, dass das eine der beiden Schaltelemente (2, 3) ortsfest angeordnet ist und das andere Schaltelement bezüglich dem erstgenannten auf einer Führung (1) translatorisch verschiebbar angeordnet ist.

6. Indikator nach Anspruch 1, dadurch gekennzeichnet, dass die beiden Schaltelemente (2,3 bzw. 21,31) übereinander angeordnet sind, wobei nach Zerstörung des Distanzhalters (4 bzw. 41) das obere, mobile Schaltelement (2 bzw. 21) unter der Wirkung der Schwerkraft auf das untere, stationär angeordnete Schaltelement (3 bzw. 31) fällt und dabei das genannte Signal auslöst.

7. Indikator nach einem der Ansprüche 1 bis 6, dadurch gekennzeichnet, dass die beiden Schaltelemente (2,3 bzw. 21.31) als Kontakte eines Stromkreises ausgebildet sind und diesen bei einer gegenseitigen Berührung schliessen und dadurch direkt das Signal auslösen.

8. Indikator nach einem der Ansprüche 3 bis 6, dadurch gekennzeichnet, dass im Bereich der durch die Zerstörung des Distanzhalters (4 bzw. 41) ausgelösten relativen Bewegung der beiden Schaltelemente (2,3 bzw. 21,31) ein Reedschalter - (1 bzw. 11) angeordnet ist, wobei die durch eine Zerstörung des Distanzhalters (4 bzw. 41) freigegebene Bewegung des einen, als Magnet ausgebildeten Schaltelements (2 bzw. 21) zum anderen Schaltelement (3 bzw. 31) hin diesen Reedschalter (1 bzw. 11) ansteuert, ohne dass es zu einer direkten Berührung der beiden Schaltelemente kommen muss.

9. Indikator nach Anspruch 8, dadurch gekennzeichnet, dass die eine Schaltelement (3) ein ortsfest angeordneter Eisenkörper ist, von welchem der Reedschalter (1) als Gleitführung für das als ringförmigen Permanentmagneten ausgebildete mobile andere Schaltelement (2) abragt, sowie dass der Distanzhalter (4) als zwischen den beiden Schaltelementen (2,3) auf den Reedschalter (1) aufgeschobene Hülse (4) ausgebildet ist.

10. Indikator nach einem der Ansprüche 1 bis 9, dadurch gekennzeichnet, dass er dampfdicht von einer Hülle (5 bzw. 51) umschlossen ist, welche mindestens teilweise aus einem durch Leckflüssigkeit zerstörbaren Feststoff besteht.

11. Indikator nach einem der Ansprüche 1 bis 10, dadurch gekennzeichnet, dass der Distanzhalter (4 bzw. 41) und gegebenenfalls die Hülle (5 bzw. 51) aus Materialien bestehen, welche ein bezogen auf die überwachte Flüssigkeit selektives Löslichkeitsverhalten besitzen.

12. Indikator nach einem der Ansprüche 1 bis 11, zum Feststellen des Auftretens von Leckflüssigkeit in wärmedämmenden Isolierungen von Fernheizleitungen, dadurch gekennzeichnet, dass der Distanzhalter (4 bzw. 41) aus einem mit Wasser reagierenden Metall oder einer solchen Legierung besteht.

Fig. 1

Fig. 3

Fig. 2